# EUROPEAN PATENT APPLICATION

(11) **EP 3 372 438 A1**
(43) Date of publication of application: **12.09.2018**
(21) Application number: 17160035.6
(22) Date of filing: 09.03.2017
(51) Int. Cl.: B60L 1/00, B60L 3/00, B60L 11/18, H02J 7/00

(54) **DUAL BATTERY UNIT FOR A VEHICLE**

(71) Applicant: Volvo Car Corporation, 40 531 Göteborg (SE)
(72) Inventor: Forssell, Jonas, 42363 Torslanda (SE); Almhagen, Petter, 44831 Floda (SE)
(74) Representative: Kransell & Wennborg KB

(57) **Abstract**

A battery unit for a vehicle, provided with a first battery adapted to supply a first load and a second battery adapted to supply a second load, and where the battery unit is adapted to be charged by an alternator, where the battery unit comprises a switch which is adapted to connect the first battery and the second battery in parallel when the alternator is adapted to charge the battery unit, and that the switch is adapted to disconnect the first battery from the second battery when the alternator is adapted not to charge the battery unit. The advantage of the invention is that a primary security system and a secondary security system can be supplied from two different batteries, such that the secondary security system is independent from the first security system.

## Description

### TECHNICAL FIELD

The present invention relates to a dual battery unit for a vehicle, which is adapted to supply a nominal voltage to the electrical system of the vehicle, and at the same time to be able to supply a high current to a starter motor while preserving the nominal voltage to the system.

### BACKGROUND ART

Vehicles comprising an internal combustion engine are subjected to a plurality of different legislative requirements and regulations. Some of these requirements and regulations are directed to fuel consumption and exhaust emission. Different countries or markets may have different requirements. One new function that is being investigated is an Autonomous Drive (AD) function, which will be governed by several new requirements. One such requirement will be that the AD function is redundant, such that a secondary support system can continue the driving if the primary drive system would fail. One reason for failing might be that there is a problem with the supply voltage. If e.g. the charge circuit of the electrical system brakes down, the supply voltage will decrease and will drop below a predefined voltage security level, which may be e.g. 10.5 volts. Below this voltage, there is no guarantee that the electronic control units will function properly, which will lead to a malfunction of the AD system.

The vehicle is thus provided with a secondary AD system. However, if the secondary AD system is supplied by the same voltage supply system, having a too low voltage output, the secondary AD system will also malfunction. It is thus of importance that the secondary AD system is supplied by an alternative supply source, which is most commonly a second battery.

A modern car is provided with a large and powerful main battery in order to be able to run the starter motor and at the same time to supply the electrical system with a stable and reliable supply voltage. The main battery is a lead-acid battery which is relatively cheap and reliable. Some cars are also provided with a smaller battery of another composition, which can be charged and discharged faster. This battery may e.g. be used for regenerative purposes, where energy is fed to the battery while braking and is fed to an electric motor when accelerating. Such a system may be referred to as a Kinetic Energy Recovery System (KERS) and requires a battery that has a faster response than a lead-acid battery.

In modern cars, the packing situation in the engine compartment is such that the main battery does not fit in the engine compartment, which used to be the regular place for the main battery. Normally, the main battery is placed at the rear of the vehicle, and an auxiliary support battery is placed at the front of the vehicle, e.g. in the engine compartment. The two batteries are connected in parallel. Such a system requires long and thick cables to transfer the needed current to and from the main battery, while auxiliary battery can be connected with short cables which reduce the power loss. Should the vehicle be provided with an Autonomous Drive system, a third battery would be required in order to be able to supply the secondary AD system with a separate supply voltage.

There is thus room for an improved battery unit for a vehicle.

### DISCLOSURE OF INVENTION

An object of the invention is therefore to provide an improved battery unit which is adapted to supply two different loads with different batteries.

The solution to the problem according to the invention is described in the characterizing part of claim 1 regarding the battery unit and in claim 11 regarding the vehicle. The other claims contain advantageous further developments of the inventive battery unit and the vehicle.

In a battery unit for a vehicle, provided with a first battery adapted to supply a first load and a second battery adapted to supply a second load, and where the battery unit is adapted to be charged by an alternator, the object of the invention is achieved in that the battery unit comprises a switch which is adapted to connect the first battery and the second battery in parallel when the alternator is adapted to charge the battery unit, and that the switch is adapted to disconnect the first battery from the second battery when the alternator is adapted not to charge the battery unit.

By this first embodiment of a battery unit according to the invention, a battery unit having two batteries is provided, where a first battery is adapted to supply a first load and a second battery is adapted to supply a second load. The first battery and the second battery can be connected in parallel with a switch. The switch is controlled in dependency of the charging status of the alternator; if the alternator charges, the two batteries are connected in parallel, if the alternator does not charge, the two batteries are disconnected. In this way, both batteries will always be charged by the alternator when the alternator charges, and when the alternator does not charge, it is ensured that one load will not drain both batteries. For a vehicle provided with an Autonomous Drive (AD) system, the inventive battery unit will ensure that the second back-up AD system can be supplied from a battery if the primary AD system fails, e.g. due to an empty battery. At the same time, the battery unit ensures that the electrical system of the vehicle receives a stable voltage when the engine is started by the starter motor, since the starter motor is supplied only from the second battery.

The capacity of the first battery is preferably larger than the capacity of the second battery. Since the first battery supplies the electrical system of the vehicle, it is important that the capacity can supply the idle system of the vehicle when parked for at least two weeks. The second battery must only be able to supply active components when the vehicle is used, and the capacity can thus be lower. Preferably, lithium-ion batteries are used, e.g. lithium-titanate batteries, which have a high energy density and that can deliver a high current when the SoC is low, which allows for a compact battery unit. In this way, it is possible to fit the battery unit in the engine compartment, which saves additional weight and cost.

### BRIEF DESCRIPTION OF DRAWINGS

The invention will be described in greater detail in the following, with reference to the attached drawings, in which
- Fig. 1: shows a schematic battery unit according to the invention, and
- Fig. 2: shows a schematic vehicle comprising a battery unit according to the invention.

### MODES FOR CARRYING OUT THE INVENTION

The embodiments of the invention with further developments described in the following are to be regarded only as examples and are in no way to limit the scope of the protection provided by the patent claims.

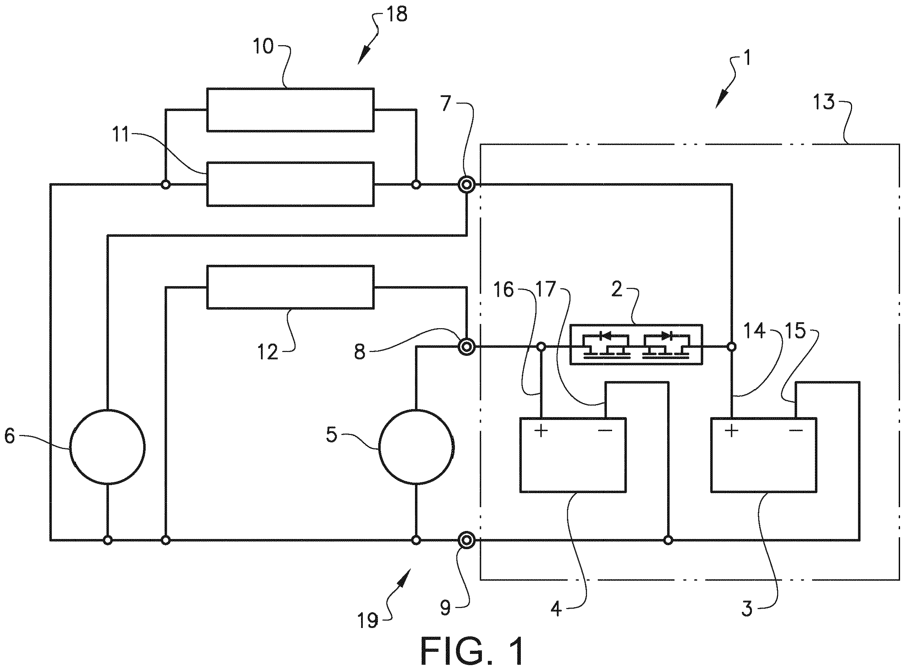

Figure 1 shows a schematic battery unit 1 comprising a first battery 3, a second battery 3 and a switch 2 enclosed in a housing 13. The battery unit 1 is provided with a first output 7 to which the positive pole 14 of the first battery 3 is connected, a second output 8 to which the positive pole 16 of the second battery 4 is connected and a ground terminal 9 to which the negative poles 15, 17 of the two batteries are connected. The switch 2 is provided between the positive pole 14 of the first battery 3 and the positive pole 16 of the second battery 4. The switch is adapted to connect the positive pole 14 to the positive pole 16 when the battery unit is charged by the alternator 6. In this way, both batteries will be charged by the alternator, and both batteries will normally be fully charged.

The alternator 6 is connected to the first output terminal 7, and will supply power to a first load 18, which consists of the electrical system 10 of the vehicle and the primary Autonomous Drive (AD) system 11. The first battery is thus normally connected in parallel with the alternator, and will be able to supply peak currents that the alternator cannot deliver to the first load. The alternator may be disabled such that it does not charge the battery unit. One such occasion may be when the batteries of the battery unit are fully charged, and the power required by the first load is relatively low. The alternator may in this case be disabled in order to protect the batteries from overcharging. The alternator may also be disabled when the vehicle accelerates, in order to minimize the load on the engine when accelerating. The first battery, when connected in parallel with the alternator, will be able to deliver a transient current surge that is larger than the nominal output current from the alternator. This current surge may have a high peak value. A second load 19 is connected to the second output 8. The second load 19 consists of the starter motor 5 and the secondary Autonomous Drive (AD) system 12.

The switch 2 is controlled in dependency of the charging mode of the alternator 6. In the charging mode, the two batteries 3, 4 are connected in parallel by closing the switch. In an idle mode, when the alternator does not charge, the two batteries are disconnected by opening the switch. The switch is preferably a semiconductor switch with a low internal resistance, but may also be a mechanical switch or a relay. In this way, both batteries will always be charged by the alternator when the alternator charges, and when the alternator does not charge, it is ensured that one load will not drain both batteries.

For a vehicle provided with an Autonomous Drive (AD) system, the inventive battery unit will ensure that the secondary AD system, which is a back-up AD system, can be supplied from a battery if the primary AD system fails, e.g. due to an empty battery. At the same time, the battery unit ensures that the electrical system of the vehicle receives a stable voltage when the engine is started by the starter motor, since the starter motor is supplied only from the second battery.

When the alternator is disabled and does not charge the battery unit, the switch disconnects the positive pole 14 of the first battery 3 from the positive pole 16 of the second battery 4. One such situation is when the engine does not run and the ignition is turned on, e.g. when the vehicle is parked and an entertainment system is still running. The first load will now be supplied solely from the first battery. By disconnecting the second battery, there is no risk that the second battery will be drained during parking. This in turn secures that there is enough power in the second battery for driving the starter motor 5 when starting the vehicle. A further advantage of disconnecting the second battery from the first battery is that it can be ensured that there is enough power in the second battery to supply the secondary AD system 12 which is connected to the second output 8.

A breakdown in the first load, e.g. a shortcut, or the alternator breaks down or the first battery is drained, when the vehicle is driving in an autonomous driving mode, may lead to a malfunction in the AD system. The vehicle is thus provided with a secondary AD system 12 which is powered by the second battery. The secondary AD system will in this case be able to control the vehicle in a secure way, e.g. by driving to the nearest exit or by making a secure stop. Preferably, the secondary AD system is always powered on, but is inactive when the primary AD system functions properly. If a problem with the power supply to the primary AD system occurs, or when a problem with the primary AD system occurs, the secondary AD system is powered on and ready to take over the autonomous driving of the vehicle. The secondary AD system is in this case powered by the fully charged second battery.

The first battery 3 is adapted to supply the first load 18 with power. The capacity of the first battery is preferably relatively large, such that it can supply the idle current needed for the components that are still active when the ignition is switched off when the vehicle is parked for a longer time. This may e.g. be the clock, alarm circuitry, remote control receiver and, at dark, the parking lights. The idle current of the vehicle is relatively low and often below one ampere. By using the first battery to supply the idle current, the second battery will be fully charged even if the first battery is drained. Should the first battery be drained when the vehicle is to be started, part or all of the electrical system may be connected to the second battery, e.g. by closing the switch 2 or by connecting the ignition system to the second battery. When the engine is running, the alternator will supply power to the complete electrical system and will charge the first battery again. In this case, it is also possible to open the switch to disconnect the second battery from the alternator until the first battery is charged partially.

The first battery is preferably a lithium-ion battery, and more preferably a lithium-titanate battery. The capacity may be e.g. in the range between 20 to 40 Ah. The second battery is preferably of the same type, but with a lower capacity. The capacity of the second battery may be e.g. in the range between 10 to 20 Ah. By using this type of battery, a compact battery unit is provided, which can be positioned at the front of the vehicle, in the engine compartment. This will save weight and cost of high current cables, and will further reduce power losses in the same high current cables. In a regular battery installation, a large lead acid battery is positioned at the rear of the vehicle.

The voltage supply unit may also comprise an electronic control unit adapted to communicate with the electric system of the vehicle and to control the switch. The electronic control unit may further comprise e.g. cell voltage monitoring, temperature measuring and monitoring, output current measuring, and CAN bus communication circuitry for communication with the electrical system of the vehicle. The electronic control unit may comprise a single printed circuit board mounted in the voltage supply unit. The switch may also be controlled from an external electronic control unit.

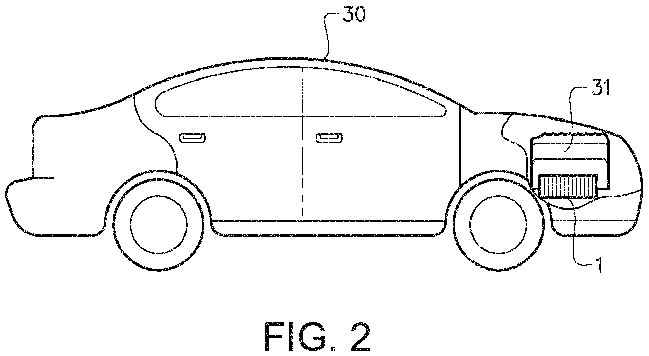

Fig. 2 shows a vehicle 30 comprising a battery unit 1 according to the invention. The battery unit is positioned at the front of the vehicle, in the engine compartment, next to the combustion engine 31. By placing the voltage supply unit at the front of the vehicle, where most of the high load components are positioned, and where the alternator of the vehicle is positioned, the cabling is simplified.

The invention is not to be regarded as being limited to the embodiments described above, a number of additional variants and modifications being possible within the scope of the subsequent patent claims.

### REFERENCE SIGNS

- 1:: Battery unit
- 2:: Switch
- 3:: First battery
- 4:: Second battery
- 5:: Starter motor
- 6:: Alternator
- 7:: First output
- 8:: Second output
- 9:: Ground
- 10:: Electrical system
- 11:: Primary AD system
- 12:: Secondary AD system
- 13:: Housing
- 14:: Positive pole
- 15:: Negative pole
- 16:: Positive pole
- 17:: Negative pole
- 18:: First load
- 19:: Second load
- 30:: Vehicle
- 31:: Combustion engine

## Claims

1. A battery unit (1) for a vehicle, provided with a first battery (3) adapted to supply a first load (18) and a second battery (4) adapted to supply a second load (12), and where the battery unit (1) is adapted to be charged by an alternator (6), wherein the battery unit (1) comprises a switch (2) which is adapted to connect the first battery (3) and the second battery (4) in parallel when the alternator (6) is adapted to charge the battery unit (1), and that the switch (2) is adapted to disconnect the first battery (3) from the second battery (4) when the alternator is adapted not to charge the battery unit (1).

2. Battery unit according to claim 1, wherein the first load (18) comprises an electrical system (10) of the vehicle and a primary AD system (11) and that the second load (19) comprises a starter motor (5) and a secondary AD system (12).

3. Battery unit according to claim 2, wherein the capacity of the first battery (3) is at least twice as large as the capacity of the second battery (4).

4. Battery unit according to any of claims 1 to 3, wherein the first battery (3) and the second battery (4) are lithium-ion batteries.

5. Battery unit according to claim 4, wherein the first battery (3) and the second battery (4) are lithium-titanate batteries.

6. Battery unit according to any of claims 1 to 5, wherein the first battery (3), the second battery (4) and the switch (2) are enclosed in the same housing (13).

7. Battery unit according to claim 6, wherein the battery unit (1) is adapted to be positioned in the engine compartment of a vehicle.

8. Vehicle, wherein the vehicle (30) comprises a battery unit (1) according to any of the preceding claims.

9. Vehicle according to claim 8, wherein the battery unit (1) is positioned in the engine compartment at the front of the vehicle.
